# EUROPEAN PATENT APPLICATION

(11) **EP 2 830 201 A1**
(43) Date of publication of application: **28.01.2015**
(21) Application number: 13275171.0
(22) Date of filing: 26.07.2013
(51) Int. Cl.: H02M 1/32, H02M 5/44, H02J 3/36

(54) **Voltage source converter module**

(71) Applicant: ALSTOM Technology Ltd, 5400 Baden (CH)
(72) Inventor: Whitehouse, Robert Stephen, Walton on the Hill Stafford ST17 0JU (GB); Davidson, Colin Charnock, Walton on the Hill Stafford ST17 0JZ (GB)
(74) Representative: Potter Clarkson LLP

(57) **Abstract**

A module (30) for use in a voltage source converter comprises:
first and second terminals (48,50) for connection to an electrical network;
an energy storage device (52);
at least one switching element, the or each switching element being switchable to switch the energy storage device (52) into or out of circuit with the first and second terminals (48,50) to selectively provide a voltage source; and
a voltage-limiting component and/or a resistive element (58), the switching element or at least one of the switching elements being switchable to selectively form a current path that passes through the voltage-limiting component and/or the resistive element (58), the switching element or at least one of the switching elements being further switchable to selectively switch the energy storage device (52) into or out of circuit with the voltage-limiting component and/or the resistive element (58).

## Description

This invention relates to a module, a chain-link converter and a voltage source converter.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC electrical networks operating at different frequencies.

In any such power transmission network, converters are required at each interface between AC and DC power to effect the required conversion, and one such form of converter is a voltage source converter (VSC).

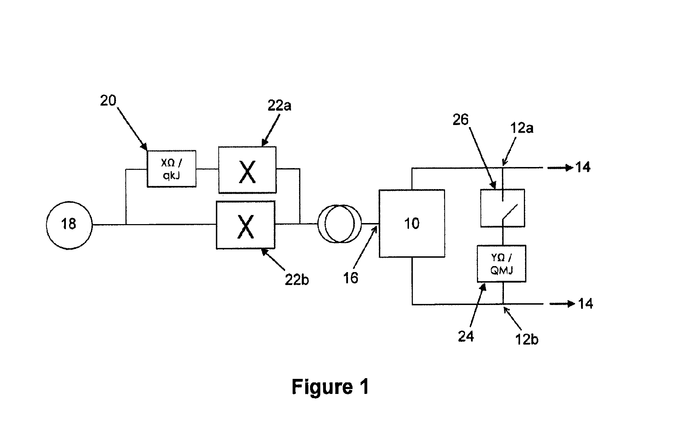

One such VSC 10 is shown in Figure 1. The VSC 10 includes DC terminals 12a,12b for connection to a DC electrical network 14 and an AC terminal 16 for connection to an AC electrical network 18.

A "soft start" circuit is connected between the VSC 10 and the AC electrical network 18. The "soft start" circuit includes a "soft start" resistor 20 and a pair of circuit breakers 22a,22b to selectively switch the resistor 20 into and out of circuit between the AC electrical network 18 and the VSC 10. The purpose of the "soft start" resistor 20 is to limit the inrush current flowing from the AC electrical network 18 when the VSC 10 is initially energised upon its connection to the AC electrical network 18.

A braking resistor 24 is connected across the DC terminals 12a,12b. The purpose of the braking resistor 24 is to selectively absorb power transmitted by the AC electrical network 18 and thus limit any rise in frequency in the AC electrical network 18 during a fault which causes a loss of power transmission in the DC electrical network 14. A switch 26 is employed to either permit current to flow in the braking resistor 24 or block current from flowing in the braking resistor 24 so that normal power transmission can be resumed after removal of the fault. The braking resistor 24 could also be employed to selectively dissipate energy from the DC electrical network 14.

According to a first aspect of the invention, there is provided a module for use in a voltage source converter comprising:
first and second terminals for connection to an electrical network;
an energy storage device;
at least one switching element, the or each switching element being switchable to switch the energy storage device into or out of circuit with the first and second terminals to selectively provide a voltage source; and
a voltage-limiting component and/or a resistive element, the switching element or at least one of the switching elements being switchable to selectively form a current path that passes through the voltage-limiting component and/or the resistive element, the switching element or at least one of the switching elements being further switchable to selectively switch the energy storage device into or out of circuit with the voltage-limiting component and/or the resistive element.

The switching element or at least one of the switching elements can be switched on or off in order to selectively form the current path that passes through the voltage-limiting component and/or the resistive element, non-limiting examples of which are described as follows.

In one non-limiting example, at least one switching element may be switched on to conduct a current and thereby direct the current through the voltage-limiting component and/or the resistive element in order to form the current path that passes through the voltage-limiting component and/or the resistive element.

In another non-limiting example, at least one switching element may be switched on to form a short-circuit that conducts a current and thereby causes the current to bypass the voltage-limiting component and/or the resistive element, and the switching element can be switched off to open the short-circuit and thereby allow the current to pass through the voltage-limiting component and/or the resistive element in order to form the current path that passes through the voltage-limiting component and/or the resistive element.

Similarly the switching element or at least one of the switching elements can be switched on or off in order to selectively switch the energy storage device into or out of circuit with the voltage-limiting component and/or the resistive element, non-limiting examples of which are described as follows.

In one non-limiting example, at least one switching element may be:
- switched on to conduct a current and thereby switch the energy storage device into circuit with the voltage-limiting component and/or the resistive element; or
- switched on to form a short-circuit that conducts a current and thereby causes the current to pass through the energy storage device but bypass the voltage-limiting component and/or the resistive element, or pass through the voltage-limiting component and/or the resistive element but bypass the energy storage device, and the switching element can be switched off to open the short-circuit and thereby allow the current to pass through the energy storage device and through the voltage-limiting component and/or the resistive element in order to switch the energy storage device into circuit with the voltage-limiting component and/or the resistive element.

In another non-limiting example, at least one switching element may be:
- switched on to conduct a current and thereby direct a current to pass through the energy storage device but bypass the voltage-limiting component and/or the resistive element, or pass through the voltage-limiting component and/or the resistive element but bypass the energy storage device, so as to switch the energy storage device out of circuit with the voltage-limiting component and/or the resistive element;
- switched on to form a short-circuit that conducts a current and thereby causes the current to pass through the energy storage device but bypass the voltage-limiting component and/or the resistive element, or pass through the voltage-limiting component and/or the resistive element but bypass the energy storage device, so as to switch the energy storage device out of circuit with the voltage-limiting component and/or the resistive element; or
- switched off to stop conducting a current and thereby switch the energy storage device out of circuit with the voltage-limiting component and/or the resistive element.

In use, the module may be configured to operate in a main operating mode to selectively provide a voltage source by switching the switching element or at least one of the switching elements to switch the energy storage device into or out of circuit with the first and second terminals. This enables the module to selectively present a voltage source to the connected electrical network. Selective presentation of a voltage source may be utilised in power applications requiring a temporary voltage source. For example, the module may be employed in a voltage source converter to selectively provide a voltage step in order to facilitate smoother transfer of power between different electrical networks.

In further use, the module may be configured to operate in further operating modes by switching the switching element or at least one of the switching elements to form a current path which passes through the voltage-limiting component and/or the resistive element so as to modify one or more electrical characteristics of the module. Each further operating mode may be, for example, a limitation mode for limiting a current, voltage or frequency in the electrical network, an energy removal mode for removing excess energy from the electrical network or a discharge mode for discharging the energy storage device to a predefined voltage level.

The use of the or each switching element to configure the module in the main and further operating modes minimises or eliminates the need for supplementary hardware (e.g. additional switching elements and control signal transmission links) to enable configuration of the module in each further operating mode. Otherwise the addition of the supplementary hardware to the module would not only result in increased switching and conduction losses, but also add to the size, weight and cost of the module.

Furthermore the arrangement of the module to enable selective switching of the energy storage device into or out of circuit with the voltage-limiting component and/or the resistive element permits optimisation of the configuration of the module in each operating mode in order to improve its efficiency from an energy and operating cost perspective. For example, when the module is configured in the main operating mode to selectively provide a voltage source, the energy storage device may be switched out of circuit with the voltage-limiting component and/or the resistive element to prevent any resistive losses resulting from current flowing through the voltage-limiting component and/or the resistive element.

The arrangement of the module according to the invention therefore results in a economical and versatile module which is capable of being configured to operate in multiple operating modes for performing various functions.

It will be appreciated that the electrical network may be an AC or DC electrical network.

The voltage-limiting component may include, for example, a surge arrestor,

The energy storage device may be any device that is capable of storing or releasing energy, e.g. a capacitor, battery or fuel cell.

The or each switching element may be an active or passive switching element. The module may include an active switching element connected in parallel with an anti-parallel passive switching element.

The active switching element may be, for example, in the form of a semiconductor device. The semiconductor device may be, but is not limited to, an insulated gate bipolar transistor, a gate turn-off thyristor, a field effect transistor, an injection-enhanced gate transistor, an integrated gate commutated thyristor or any other self-commutated semiconductor device.

The passive switching device may be, for example, a diode.

When at least one switching element is an active switching element, the module may further include a control unit configured to control the switching of the or each active switching element. It will be understood that controlling the switching of the or each active switching element involves switching on or off the or each active switching element.

In embodiments of the invention, the current path may interconnect the first and second terminals. The formation of a current path which interconnects the first and second terminals enables the module to present the voltage-limiting component and/or the resistive element to a current flowing from the electrical network via its first and second terminals.

The ability of the module to present the voltage-limiting component and/or the resistive element to a current flowing from the electrical network via the first and second terminals enables the module to carry out various functions, examples of which are described as follows.

In such embodiments employing the use of a control unit, the control unit may be configured to control the switching of the active switching element or at least one of the active switching elements to form the current path to permit a current to flow from the electrical network through the voltage-limiting component and/or the resistive element to regulate or limit a current, voltage or frequency in the electrical network. This not only provides the module with reliable means of regulating the current, voltage or frequency in the electrical network, but also provides the module and the associated electrical network with overcurrent, overvoltage or overfrequency protection. This thereby minimises or eliminates the need for supplementary hardware with current, voltage or frequency regulating, limiting or protective capabilities.

For example, when the module is initially energised upon its connection to the electrical network, a inrush current flows from the electrical network into the module. Conventionally the inrush current is limited using a separate "soft start" circuit. On the other hand the ability of the module to present a resistance to a current flowing from the electrical network via its first and second terminals enables the module to be configured to operate in a current limitation mode to limit the inrush current. Therefore, the module is capable of carrying out the function of the separate "soft start" circuit. This renders the separate "soft start" circuit redundant and thereby permits reductions in the overall size, weight and cost of the electrical network through omission of the separate "soft start" circuit.

In further such embodiments employing the use of a control unit, the control unit may be configured to control the switching of the active switching element or at least one of the active switching elements to form the current path to permit a current to flow from the electrical network through the the voltage-limiting component and/or resistive element to remove excess energy from the electrical network. This provides the module with reliable means of regulating energy levels in the electrical network, thus minimising or eliminating the need for supplementary hardware with energy removal capabilities.

In further embodiments of the invention, the current path may be a current loop within the module. The formation of a current loop within the module enables the module to present the voltage-limiting component and/or the resistive element to a current flowing within the module.

In such embodiments employing the use of a control unit, the control unit may be configured to control the switching of the active switching element or at least one of the active switching elements to form the current path to discharge the energy storage device to a predefined voltage level. This not only enables the energy storage device to be rapidly discharged to a safe voltage level in the event that the energy storage device is subjected to an overvoltage, but also enables the energy storage device to be discharged to a voltage level which is sufficiently low to provide a safe working environment for a person carrying out maintenance and repair of the module. This thereby obviates the need for a separate discharging circuit to selectively discharge the energy storage device.

Optionally the switching element or at least one of the switching elements may be switchable to form a first current path which interconnects the first and second terminals and a second current path which is a current loop within the module, the first and second current paths overlapping each other. Formation of the overlapping first and second current paths permits the module to be configured to concurrently operate in two or more operating modes.

In embodiments of the invention, the control unit may be configured to control the switching of the active switching element or at least one of the active switching elements to form the current path to modify a rate of charge or discharge of the energy storage device. This provides the module with reliable means of regulating the charging and/or discharging behaviour of the energy storage device, thus improving the reliability of the module.

In embodiments of the invention, the module may include a plurality of electrical blocks arranged as first and second pairs of electrical blocks, the first and second pairs of electrical blocks being connected in parallel with the energy storage device in a full-bridge arrangement, each of the plurality of electrical blocks including a switching element, one of the plurality of electrical blocks including the voltage-limiting component and/or one of the plurality of electrical blocks including the resistive element.

The configuration of the module in this manner provides the module with reliable means of selectively providing a voltage source. In addition the configuration of the module in this manner provides the module with current blocking capability, i.e. the module is capable of being configured in a current blocking mode to provide an opposing voltage to a current (e.g. a fault current) flowing between its first and second terminals.

If each electrical block includes an active switching element, the parallel connection of the plurality of electrical blocks and energy storage device in a full-bridge arrangement defines a 4-quadrant bipolar module which can provide negative, zero or positive voltage and can conduct current in two directions.

However, if the module is only required to provide either a positive or negative voltage as well as a zero voltage, the module can be arranged so that switching of the switching element of the electrical block including the voltage-limiting component and/or the resistive element is not required to configure the module to operate in the main operating mode to selectively provide a voltage source. Hence, in this case, switching of the switching element of the electrical block including the voltage-limiting component and/or the resistive element is only required to configure the module in each further operating mode to form the current path.

In embodiments of the invention employing the use of a plurality of electrical blocks, the voltage-limiting component is connected in parallel or series with the switching element of one of the plurality of electrical blocks and/or the resistive element is connected in parallel or series with the switching element of one of the plurality of electrical blocks.

When the voltage-limiting component is connected across the switching element of one of the plurality of electrical blocks, the voltage-limiting component restricts the maximum voltage across the corresponding switching element to a defined value. This permits the use of a switching element with a lower voltage rating and higher current rating in comparison to the other switching elements, thus resulting in a lower overall module power loss in the module. Moreover, in the event of a fault current flowing in the module, the voltage-limiting component acts as a protection device to prevent damage to the corresponding switching element.

One of the plurality of electrical blocks may include both of the voltage-limiting component and the resistive element. Alternatively, one of the plurality of electrical blocks may include the voltage-limiting component while another of the plurality of electrical blocks may include the resistive element.

In further embodiments of the invention employing the use of a plurality of electrical blocks, the electrical block including the voltage-limiting component and/or the resistive element may include at least one passive switching element arranged such that the electrical block including the voltage-limiting component and/or the resistive element can conduct current in only one direction. The arrangement of the electrical block including the voltage-limiting component and/or the resistive element in this manner results in savings in terms of size, weight and cost of the module if the module is not required to be configured to operate in any operating mode which requires the electrical block including the voltage-limiting component and/or the resistive element to conduct current in two directions.

The number (i.e. one or more) of switching elements, energy storage devices, voltage-limiting components and resistive elements in the module according to the invention may vary depending on the requirements of the associated power application.

According to a second aspect of the invention, there is provided a chain-link converter comprising a plurality of series-connected modules, wherein each module is in accordance with any embodiment of the first aspect of the invention.

The structure of the chain-link converter permits build up of a combined voltage-limiting component and/or resistive element in the chain-link converter, which has a higher rating than the rating available from the voltage-limiting component and/or resistive element of each of its individual modules, via the insertion of the voltage-limiting components and/or resistive elements of multiple modules, into the chain-link converter. As such the chain-link converter is capable of forming a combined voltage-limiting component and/or resistive element with a wide range of ratings to suit a range of power requirements.

In addition the modular arrangement of the chain-link converter means that it is straightforward to increase or decrease the number of modules in the chain-link converter to provide a combined voltage-limiting component and/or resistive element with a desired power, current or voltage rating.

According to a third aspect of the invention, there is provided a voltage source converter may comprise at least one module according to any embodiment of the first aspect of the invention.

Incorporation of one or more modules according to the first aspect of the invention into a voltage source converter provides the voltage source converter with a wide range of functionality, i.e. the capability to operate in multiple operating modes for performing various functions. In contrast omission of the or each such module from the voltage source converter would require the addition of supplementary hardware to provide the voltage source converter with a similar range of functionality, such supplementary hardware adding size, weight and cost to the voltage source converter.

Preferably the voltage source converter includes:
first and second DC terminals for connection to a DC electrical network;
at least one converter limb extending between the first and second DC terminals and having first and second limb portions separated by an AC terminal, the or each AC terminal being connectable to an AC electrical network, each limb portion including at least one module according to any embodiment of the first aspect of the invention or a chain-link converter according to any embodiment of the second aspect of the invention.

In use, each limb portion is controllable to configure the or each corresponding module to operate in the main operating mode to enable the limb portion to selectively provide one or more voltage steps in order to facilitate smoother transfer of power between the AC and DC electrical networks.

The configuration of the voltage source converter in this manner ensures that the or each module is able to reliably remove excess energy from the AC electrical network and thereby prevent an overfrequency in the AC electrical network during a fault which causes a loss of power transmission in the DC electrical network. In contrast, a conventional braking resistor connected across the first and second DC terminals is incapable of removing excess energy from the AC electrical network in the event of a short circuit in the DC electrical network, because the current flowing from the AC electrical network flows through the short-circuit and bypasses the conventional braking resistor.

Optionally the voltage source converter may include multiple converter limbs, the AC terminal of each converter limb being connected to a respective phase of a multi-phase AC electrical network.

Preferred embodiments of the invention will now be described, by way of example only, with reference to the accompanying drawings in which:
Figure 1 shows, in schematic form, a prior art voltage source converter interconnecting AC and DC electrical networks;
Figure 2 shows, in schematic form, a module according to a first embodiment of the invention;
Figure 3 shows, in schematic form, a voltage source converter;
Figures 4a to 4f illustrates, in schematic form, the operation of the module of Figure 3 in a main operating mode;
Figures 5a to 5d illustrates, in schematic form, the operation of the module of Figure 3 in further operating modes;
Figure 6 shows, in schematic form, a module according to a second embodiment of the invention;
Figure 7 shows, in schematic form, a module according to a third embodiment of the invention; and
Figure 8 shows, in schematic form, a module according to a fourth embodiment of the invention.

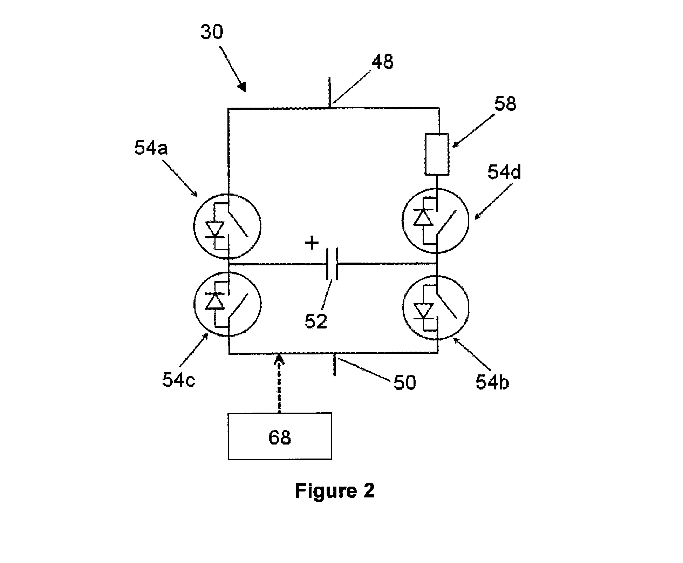

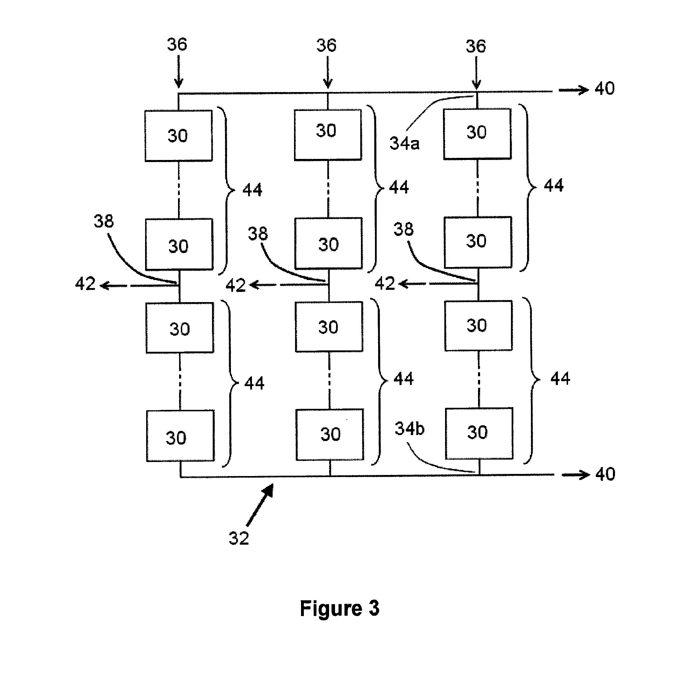

A first module 30 according to a first embodiment of the invention is shown in Figure 2 and forms part of a voltage source converter 32 as shown in Figure 3.

The voltage source converter 32 includes first and second DC terminals 34a,34b and a plurality of converter limbs 36. Each converter limb 36 extends between the first and second DC terminals 34a,34b and has first and second limb portions separated by an AC terminal 38.

In use, the first and second DC terminals 34a,34b of the voltage source converter 32 are respectively connected to positive and negative terminals of a DC electrical network 40, and the AC terminal 38 of each converter limb 36 is connected to a respective phase of a multi-phase AC electrical network 42.

Each of the first and second limb portions includes a chain-link converter 44. The chain-link converter 44 includes a plurality of series-connected first modules 30.

Figure 2 shows, in schematic form, the structure of each first module 30.

Each first module 30 includes first and second terminals 48,50. Each first module 30 further includes an energy storage device in the form of a capacitor 52 and first, second, third and fourth electrical blocks 54a,54b,54c,54d.

The first and fourth electrical blocks 54a,54d are arranged as a first pair of electrical blocks 54, and the second and third electrical blocks 54b,54c are arranged as a second pair of electrical blocks 54. The first and second pairs of electrical blocks 54a,54b,54c,54d are connected in parallel with the capacitor 52 between the first and second terminals 48,50 in a full-bridge arrangement to define a 4-quadrant bipolar module which can provide negative, zero or positive voltage and can conduct current in two directions. The first terminal 48 defines a junction between the first and fourth electrical blocks 54a,54d, while the second terminal 50 defines a junction between the second and third electrical blocks 54b,54c.

Each of the plurality of electrical blocks 54a,54b,54c,54d includes an active switching element connected in parallel with an anti-parallel passive switching element.

Each active switching element is constituted by a semiconductor device in the form of an Insulated Gate Bipolar Transistor (IGBT). Each passive switching element is constituted by a diode. It is envisaged that each switching element may be replaced by a different switching element. For example, in other embodiments of the invention, each IGBT may be replaced by a gate turn-off thyristor, a field effect transistor, an injection-enhanced gate transistor, an integrated gate commutated thyristor or any other self-commutated semiconductor device.

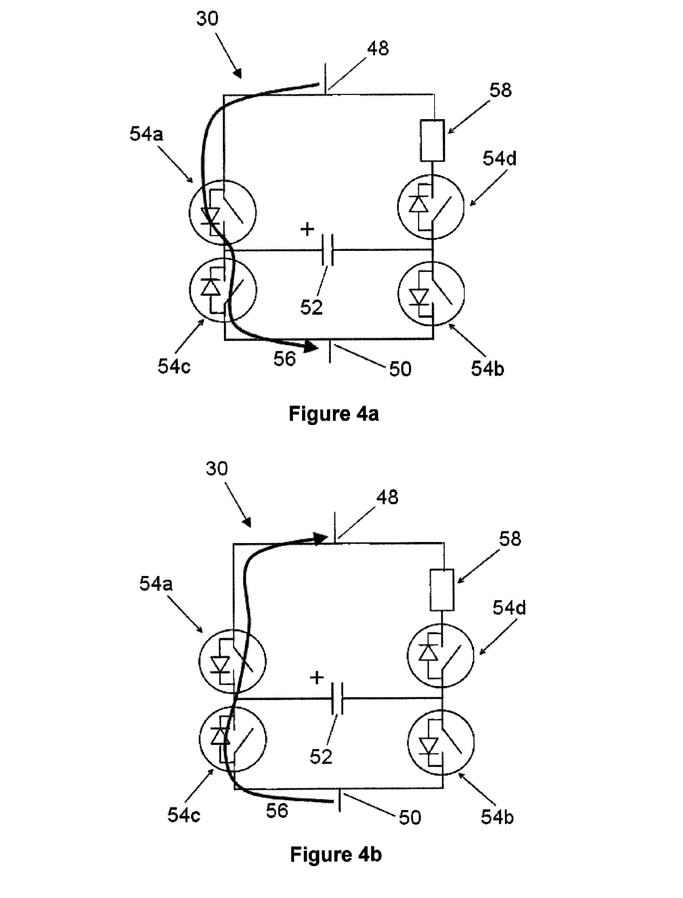

In use, each first module 30 can be configured to operate in a main operating mode to selectively provide a voltage source. Configuration of a first module 30 to operate in the main operating mode is described as follows, with reference to Figures 4a to 4f.

The capacitor 52 of the first module 30 is selectively bypassed or inserted into the corresponding chain-link converter 44 by changing the states of the switching elements. This selectively directs current 56 through the capacitor 52 or causes current 56 to bypass the capacitor 52, so that the first module 30 provides a negative, zero or positive voltage.

The capacitor 52 of the first module 30 is bypassed when the switching elements in the first module 30 are configured to form a short circuit in the first module 30. This causes current 56 in the corresponding chain-link converter 44 to pass through the short circuit and bypass the capacitor 52, as shown in Figures 4a and 4b, and so the first module 30 provides a zero voltage, i.e. the first module 30 is configured in a bypassed mode.

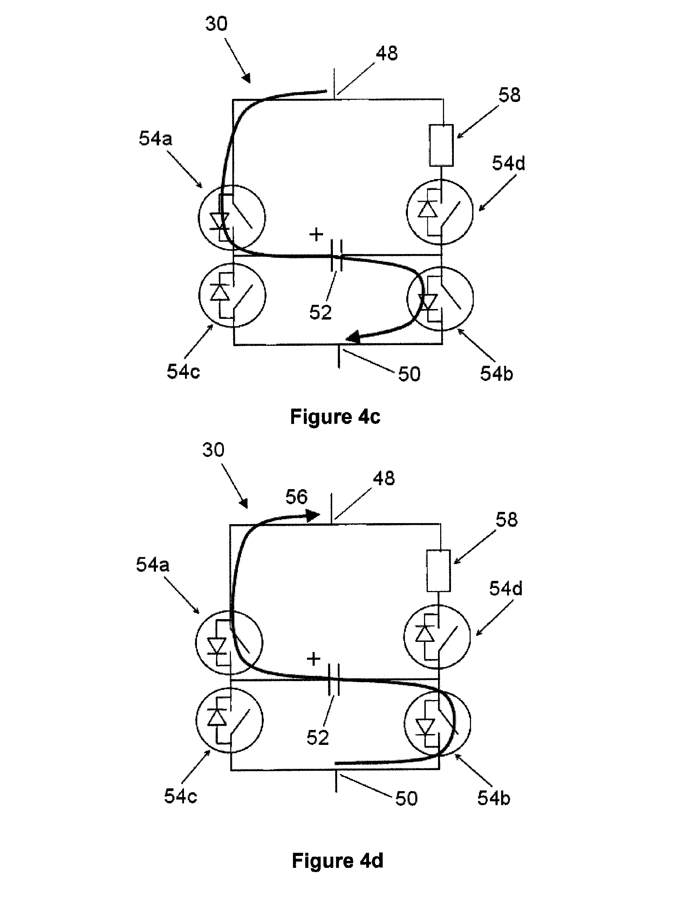

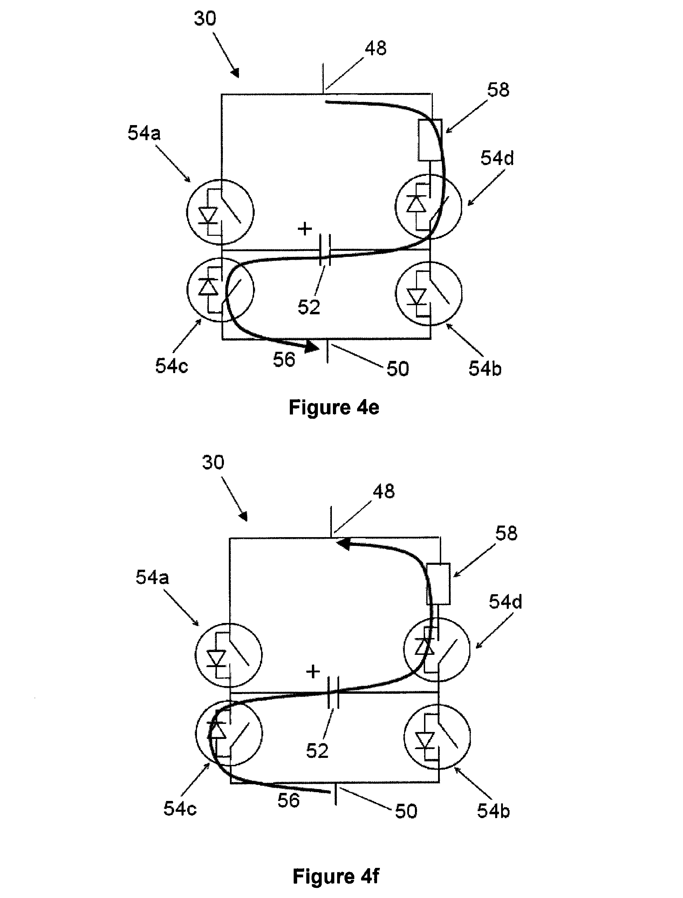

The capacitor 52 of the first module 30 is inserted into the corresponding chain-link converter 44 when the switching elements in the first module 30 are configured to allow the current 56 in the corresponding chain-link converter 44 to flow into and out of the capacitor 52, as shown in Figures 4c, 4d, 4e and 4f. The capacitor 52 then charges or discharges its stored energy so as to provide a non-zero voltage, i.e. the first module 30 is configured in a non-bypassed mode. The full-bridge arrangement of the first module 30 permits configuration of the switching elements in the first module 30 to cause current 56 to flow into and out of the capacitor 52 in either direction, and so the first module 30 can be configured to provide a negative or positive voltage in the non-bypassed mode.

It is possible to build up a combined voltage across each chain-link converter 44, which is higher than the voltage available from each of its individual first modules 30, via the insertion of the capacitors 52 of multiple first modules 30, each providing its own voltage, into each chain-link converter 44. In this manner switching of the switching elements in each first module 30 causes each chain-link converter 44 to provide a stepped variable voltage source, which permits the generation of a voltage waveform across each chain-link converter 44 using a step-wise approximation. Operation of each chain-link converter 44 in this manner can be used to generate an AC voltage waveform at the AC terminal 38 so as to enable the voltage source converter 32 to transfer power between the AC and DC electrical networks 40,42.

The configuration of each first module 30 further provides the first module 30 with current blocking capability, i.e. each first module 30 is capable of being configured in a current blocking mode to provide an opposing voltage to a current (e.g. a fault current) flowing between its first and second terminals 48,50.

The fourth electrical block 54d of each first module 30 further includes a resistive element in the form of a resistor 58. In the fourth electrical block 54d, the resistor 58 is connected in series with the parallel-connection of the IGBT and the anti-parallel diode.

The arrangement of each first module 30 in this manner permits, in each first module 30, switching of the switching elements to selectively switch the capacitor 52 into or out of circuit with the resistor 58.

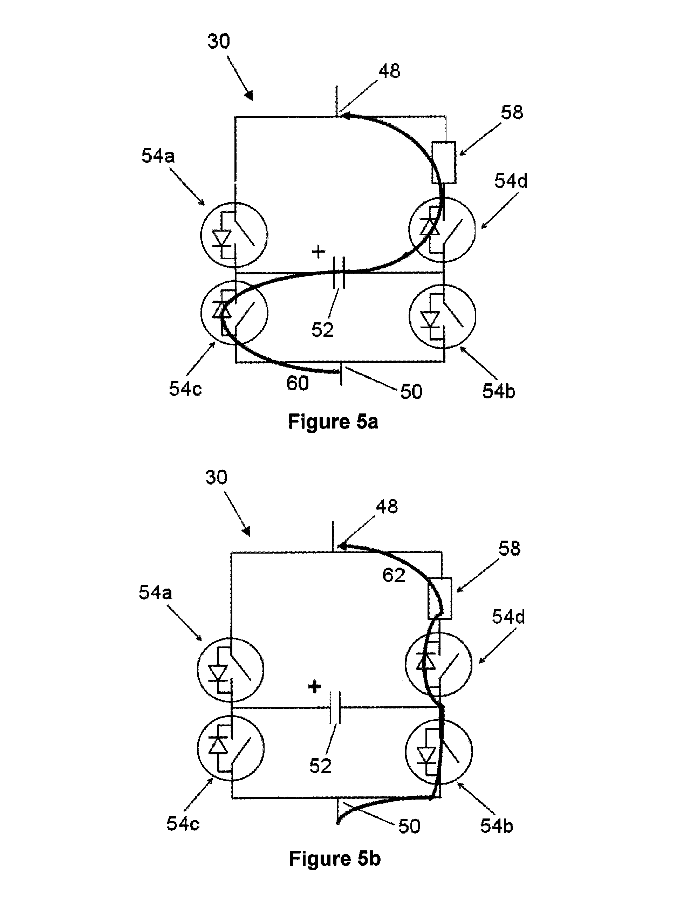

In use, the switching elements are switchable to form a current path which passes through the resistor 58. In each first module 30, the switching elements may be switched to configure the first module 30 to operate in further operating modes by forming various current paths, examples of which are illustrated, in schematic form, in Figures 5a to 5d.

Figure 5a illustrates, in schematic form, the formation of a first current path 60 which interconnects the first and second terminals 48,50. The first current path 60 is formed by switching off the IGBTs in the electrical blocks 54a,54b,54c,54d. The first current path 60 starts from the second terminal 50, then passes through the anti-parallel diode of the third electrical block 54c, the capacitor 52 and the anti-parallel diode and resistor 58 of the fourth electrical block 54d, and ends at the first terminal 48.

Figure 5b illustrates, in schematic form, the formation of a second current path 62 which interconnects the first and second terminals 48,50. The second current path 62 is formed by switching off the IGBTs in the first, third and fourth electrical blocks 54a,54c,54d and switching on the IGBT in the second electrical block 54b. The second current path 62 starts from the second terminal 50, then passes through the IGBT of the second electrical block 54b and the anti-parallel diode and resistor 58 of the fourth electrical block 54d, and ends at the second current path 62 ends at the first terminal 48.

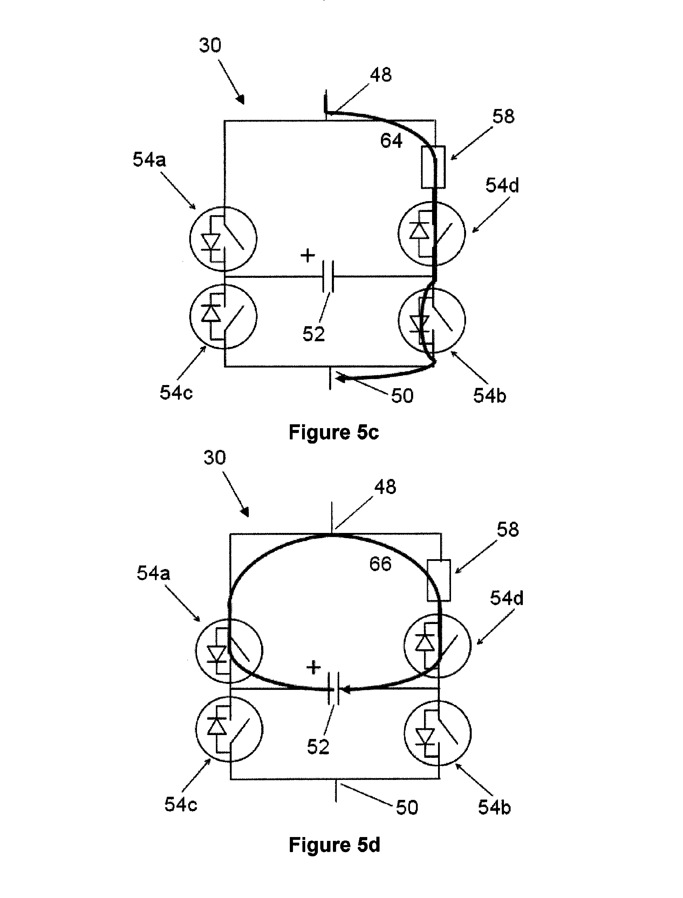

Figure 5c illustrates, in schematic form, the formation of a third current path 64 which interconnects the first and second terminals 48,50. The third current path 64 is formed by switching off the IGBTs in the first, second and third electrical blocks 54a,54b,54c and switching on the IGBT in the fourth electrical block 54d. The third current path 64 starts from the first terminal 48, then passes through the IGBT and resistor 58 of the fourth electrical block 54d and the anti-parallel diode of the second electrical block 54b, and ends at the second terminal 50.

The configuration of a first module 30 to form each of the first, second and third current paths 60,62,64 enables the first module 30 to present a resistance to a current flowing from the AC or DC electrical network 40,42 via its first and second terminals 48,50.

Figure 5d illustrates, in schematic form, the formation of a fourth current path 66 which is a current loop within the module. The fourth current path 66 is formed by switching off the IGBTs in the second and third electrical blocks 54b,54c and switching on the IGBTs in the first and fourth electrical blocks 54a,54d. The fourth current path 66 passes through the IGBT of the first electrical block 54a, the capacitor 52 and the IGBT and resistor 58 of the fourth electrical block 54d.

The configuration of a first module 30 to form the fourth current path 66 enables each first module 30 to present a resistance to a current flowing within the first module 30.

It will be appreciated that the aforementioned current paths 60,62,64,66 are examples of current paths that can be formed in each first module 30, and the switching elements of each first module 30 are switchable to form other current paths, whereby each current path passes through the corresponding resistor 58.

In addition to the capability to build up a combined voltage, the structure of each chain-link converter 44 also permits build up of a combined resistance in that chain-link converter 44, which is higher than the resistance available from the resistor 58 of each of its individual first modules 30, via the insertion of the resistors 58 of multiple first modules 30, each providing its own resistance, into that chain-link converter 44. As such each chain-link converter 44 is capable of presenting a wide range of resistances to suit a range of power requirements.

Each first module 30 further includes a control unit 68 configured to control the switching of the corresponding IGBTs.

Operation of the voltage source converter 32 of Figure 3 is described as follows, with reference to Figures 4a to 4d and 5a to 5b.

Prior to the connection of the voltage source converter 32 to the AC electrical network 42, the DC voltage across the first and second DC terminals 34a,34b is zero. At this stage each control unit 68 controls the switching of the switching elements in each first module 30 to configure each first module 30 to operate in a current limitation mode by forming the first current path 60 in each first module 30, as shown in Figure 5a.

Upon connection of the AC electrical network 42 and the voltage source converter 32, an inrush current flows from the AC electrical network 42 through the voltage source converter 32 to the DC electrical network 40. The configuration of each first module 30 to operate in the current limitation mode causes the inrush current to flow through the first current path 60 in each first module 30. As such each first module 30 is able to present a resistance to the inrush current and thereby limit the magnitude of the inrush current, thereby protecting the voltage source converter 32 from damage.

Thereafter, each control unit 68 controls the switching of the IGBTs of each first module 30 to operate in the main operating mode to selectively provide a voltage source. This enables each chain-link converter 44 to generate an AC voltage waveform at the AC terminal 38 so as to enable the voltage source converter 32 to transfer power between the AC and DC electrical networks 40,42.

The bridge configuration of the voltage source converter 32 means that each first module 30 in the main operating mode is only required to provide a zero or positive voltage for a particular current direction, as shown in Figures 4a to 4d. Therefore, switching of the switching element of the fourth electrical block 54d is not required to configure each first module 30 to operate in the main operating mode so as to enable the voltage source converter 32 to transfer power between the AC and DC electrical networks 40,42. As such, during the operation of each first module 30 in the main operating mode, the capacitor 52 is not switched into circuit with the resistor 58, thus preventing any resistive losses resulting from current flowing through the resistor 58.

A fault or other abnormal operating condition in the DC electrical network 40 may lead to loss of power transmission in the DC electrical network 40. Since the AC electrical network 42 will continue to transmit power to the voltage source converter 32, it becomes necessary to absorb excess energy from the AC electrical network 42 to avoid an overfrequency in the AC electrical network 42. To absorb the excess energy from the AC electrical network 42, each control unit 68 controls the switching of the switching elements in each first module 30 to configure each first module 30 to operate in a frequency limitation mode by forming the second current path 62 in each first module 30, as shown in Figure 5b. The configuration of each first module 30 to operate in the frequency limitation mode permits the current flowing from the AC electrical network 42 to pass through the resistor 58 in each first module 30 so as to enable excess energy to be removed from the AC electrical network 42 via dissipation of energy in the resistor 58 in each first module 30.

Accumulation of excess energy in the DC electrical network 40 may occur as a result of an receiving electrical network (not shown) connected downstream of the DC electrical network 40 being rendered incapable of receiving power whilst the DC electrical network 40 continues to transmit power. To absorb the excess energy from the DC electrical network 40, each control unit 68 controls the switching of the switching elements in each first module 30 to configure each first module 30 to operate in an energy removal mode by forming the third current path 64 in each first module 30, as shown in Figure 5c. The configuration of each first module 30 to operate in the energy removal mode permits the current flowing from the DC electrical network 40 to pass through the resistor 58 in each first module 30 so as to enable excess energy to be removed from the DC electrical network 40 via dissipation of energy in the resistor 58 in each first module 30.

During operation of the voltage source converter 32, the capacitor 52 of a first module 30 may be subjected to an overvoltage, which may damage the capacitor 52. Damage to the capacitor 52 can be prevented by rapidly discharging the capacitor 52 to a safe voltage level. To rapidly discharge the capacitor 52 to a safe voltage level, the control unit 68 controls the switching of the switching elements in the first module 30 to configure the first module 30 to operate in a rapid discharge mode by forming the fourth current path 66 in the first module 30, as shown in Figure 5d. The configuration of the first module 30 to operate in the rapid discharge mode connects the capacitor 52 and the resistor 58 in a current loop, which permits discharging of the capacitor 52 via dissipation of energy in the resistor 58.

Discharging of a capacitor 52 of a first module 30 to provide a safe working environment for a person carrying out maintenance and repair of the first module 30 may also be required. To discharge the capacitor 52 to a voltage level which is sufficiently low to provide a safe working environment for a person carrying out maintenance and repair of the first module 30, the control unit 68 controls the switching of the switching elements in the first module 30 to configure the first module 30 to operate in a safety discharge mode by forming the fourth current path 66 in the first module 30, as shown in Figure 5d. The configuration of the first module 30 to operate in the safety discharge mode connects the capacitor 52 and the resistor 58 in a current loop, which permits discharging of the capacitor 52 via dissipation of energy in the resistor 58.

Each first module 30 may be configured to operate in other further operating modes.

In one such further operating mode, each control unit 68 may be configured to control the switching of the IGBTs in the respective first module 30 to form a current path passing through the resistor 58 to regulate or limit a voltage in the voltage source converter 32, the AC electrical network 42 and/or the DC electrical network 40.

In another such further operating mode, each control unit 68 may be configured to control the switching of the IGBTs in the respective first module 30 to form a current path passing through the resistor 58 and switch the capacitor 52 into circuit with the resistor 58 to modify a rate of charge or discharge of the capacitor 52 in order to regulate the charging and/or discharging behaviour of the capacitor 52.

The use of the switching elements in each first module 30 to configure each first module 30 in the main and further operating modes minimises or eliminates the need for supplementary hardware (e.g. additional switching elements and control signal transmission links) to enable configuration of each first module 30 in each further operating mode. Otherwise the addition of the supplementary hardware to each first module 30 would not only result in increased switching and conduction losses, but also add to the size, weight and cost of each first module 30.

Furthermore, for each first module 30, the arrangement of the first module 30 to enable selective switching of the capacitor 52 into or out of circuit with the resistor 58 permits optimisation of the configuration of the first module 30 in each operating mode in order to improve its efficiency from an energy and operating cost perspective.

The arrangement of the first module 30 as shown in Figure 2 therefore results in a economical and versatile module which is capable of being configured to operate in multiple operating modes for performing various functions. In turn, incorporation of the first modules 30 into the voltage source converter 32 of Figure 2 provides the voltage source converter 32 with a wide range of functionality, i.e. the capability to operate in multiple operating modes for performing various functions. In contrast omission of the first modules 30 from the voltage source converter 32 would require the addition of supplementary hardware to provide the voltage source converter 32 with a similar range of functionality, such supplementary hardware adding size, weight and cost to the voltage source converter 32.

Also, the configuration of the voltage source converter 32 in the manner shown in Figure 3 ensures that each first module 30 is able to reliably remove excess energy from the AC electrical network 42 and thereby prevent an overfrequency in the AC electrical network 42 during a fault which causes a loss of power transmission in the DC electrical network 40. In contrast, a conventional braking resistor 58 connected across the first and second DC terminals 34a,34b is incapable of removing excess energy from the AC electrical network 42 in the event of a short circuit in the DC electrical network 40, because the current flowing from the AC electrical network 42 flows through the short-circuit and bypasses the conventional braking resistor 58.

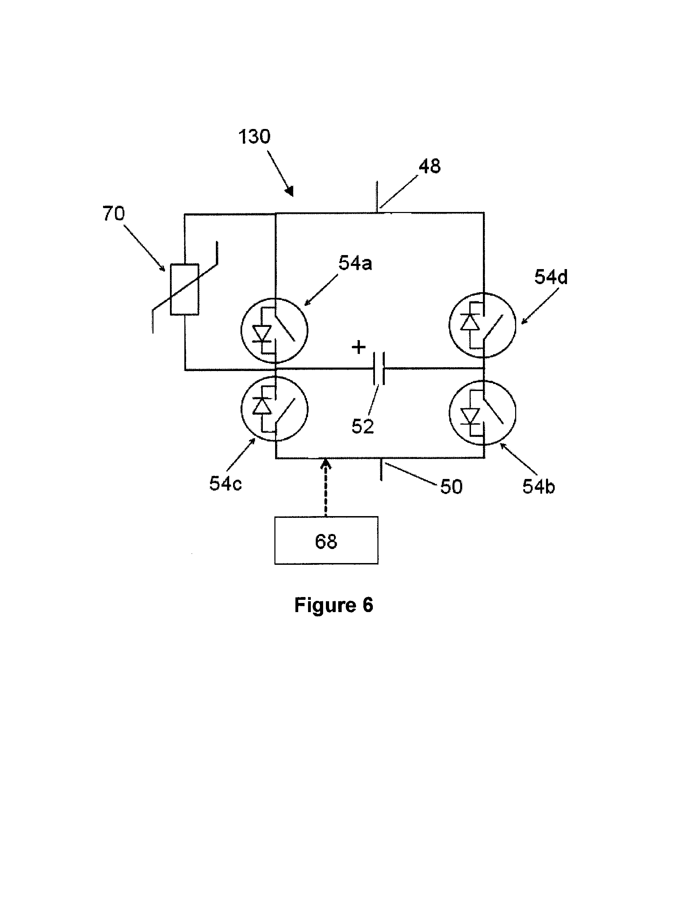

A second module 130 according to a second embodiment of the invention is shown in Figure 6 and forms part of a voltage source converter 32 as shown in Figure 3. The second module 130 of Figure 6 is similar in structure and operation to the first module 30 of Figure 2, and like features share the same reference numerals.

The second module 130 differs from the first module 30 in that, in the second module 130, the first electrical block 54a includes a voltage-limiting component being connected in parallel with the corresponding switching element, and the fourth electrical block 54d omits the resistor 58. In the embodiment shown, the voltage-limiting component includes a surge arrestor 70.

The arrangement of each second module 130 in this manner permits, in each second module 130, switching of the switching elements to selectively switch the capacitor 52 into or out of circuit with the surge arrestor 70. In the embodiment shown, in use, the IGBT of the first electrical block 54a may be:
- switched on to form a short-circuit that conducts a current and thereby causes the current to pass through the capacitor 52 but bypass the surge arrestor 70, so as to switch the capacitor 52 out of circuit with the surge arrestor 70; and
- switched off to open the short-circuit and thereby allow the current to pass through the capacitor 52 and through the surge arrestor 70 in order to switch the capacitor 52 into circuit with the surge arrestor 70.

In use, the switching elements are switchable to form a current path which passes through the surge arrestor 70. In the embodiment shown, the IGBT of the first switching block 54a may be switched on to form a short-circuit that conducts a current and thereby causes the current to bypass the surge arrestor 70, and the IGBT of the first switching block 54a can be switched off to open the short-circuit and thereby allow the current to pass through the surge arrestor 70 in order to form the current path that passes through the surge arrestor 70.

The structure of each chain-link converter 44 also permits build up of a combined voltage-limiting component in that chain-link converter 44, which has a higher rating available from the voltage-limiting component of each of its individual second modules, via the insertion of the voltage-limiting components of multiple second modules, into that chain-link converter. As such each chain-link converter 44 is capable of presenting a voltage-limiting component with a wide range of ratings to suit a range of power requirements.

As described above, the bridge configuration of the voltage source converter 32 means that each second module 130 in the main operating mode is only required to provide a zero or positive voltage for a particular current direction, as shown in Figures 4a to 4d. Moreover, the bridge configuration of the voltage source converter 32 means that current only flows in one direction through each second module 130 operating in the main operating mode. Therefore, during the operation of each second module 130 in the main operating mode, switching of the IGBT of the first electrical block 54a of each second module 130 is not required. Switching of the IGBT of the first electrical block 54a of each second module 130 is only required during the configuration of each second module 130 to operate in the current blocking and discharge modes. Consequently, during the operation of the voltage source converter 32, any losses in the first electrical block 54a is primarily due to conduction.

The surge arrestor 70 restricts the maximum voltage across the corresponding IGBT to a defined value. This permits the use of an IGBT with a lower voltage rating and higher current rating in comparison to the other IGBTs. In general such an IGBT will have a lower on state voltage drop and slope resistance, thus resulting in a lower overall module power loss in the second module 130 when compared to the first module 30.

Moreover, in the event of a fault current flowing in the second module 130 and the voltage level of the capacitor 52 rising towards its maximum permitted value, the surge arrestor 70 will conduct to protect the corresponding IGBT whilst simultaneously providing a back emf to oppose the flow of fault current in the second module 130. At this stage the IGBT of the first electrical block 54b may be switched off to form the current path that passes through the surge arrestor 70 such that the fault current fully flows through the surge arrestor 70. In this manner, the surge arrestor 70 acts as a protection device to prevent damage to the corresponding IGBT and second module 130.

For each second module 130, the arrangement of the second module 130 to enable selective switching of the capacitor 52 into or out of circuit with the surge arrestor 70 permits optimisation of the configuration of the second module 30 in each operating mode in order to improve its efficiency from an energy and operating cost perspective.

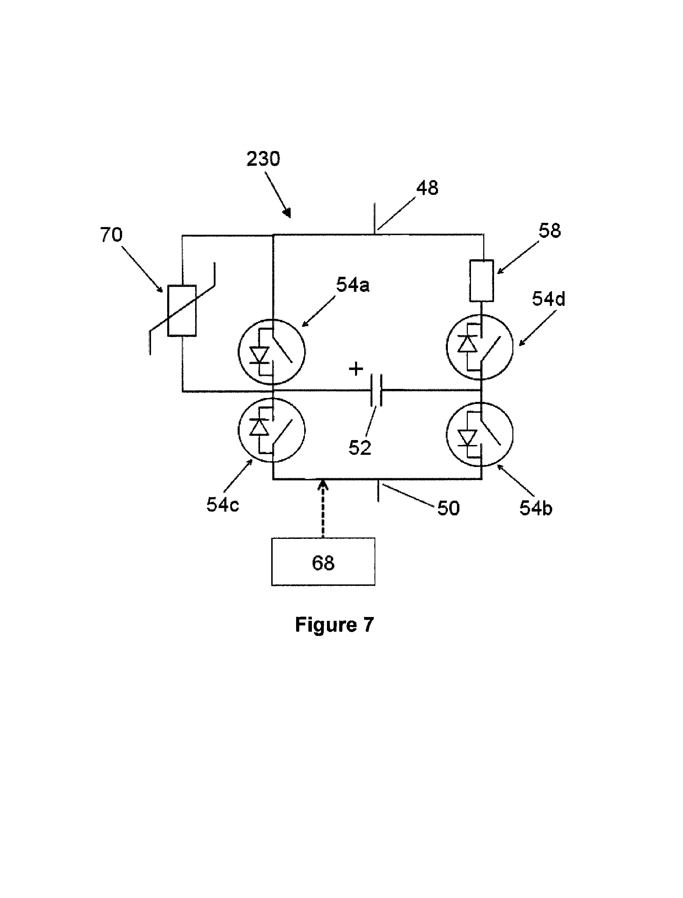

A third module 230 according to a third embodiment of the invention is shown in Figure 7 and forms part of a voltage source converter 32 as shown in Figure 3. The third module 230 of Figure 7 is similar in structure and operation to the first module 30 of Figure 2, and like features share the same reference numerals.

The third module 230 differs from the first module 30 in that, in the third module 230, the first electrical block 54a further includes a voltage-limiting component being connected in parallel with the corresponding switching element. In the embodiment shown, the voltage-limiting component includes a surge arrestor 70.

The third module 230 of Figure 7 is similar in operation to the second module 130 of Figure 6 in terms of its operation with respect to the voltage-limiting component.

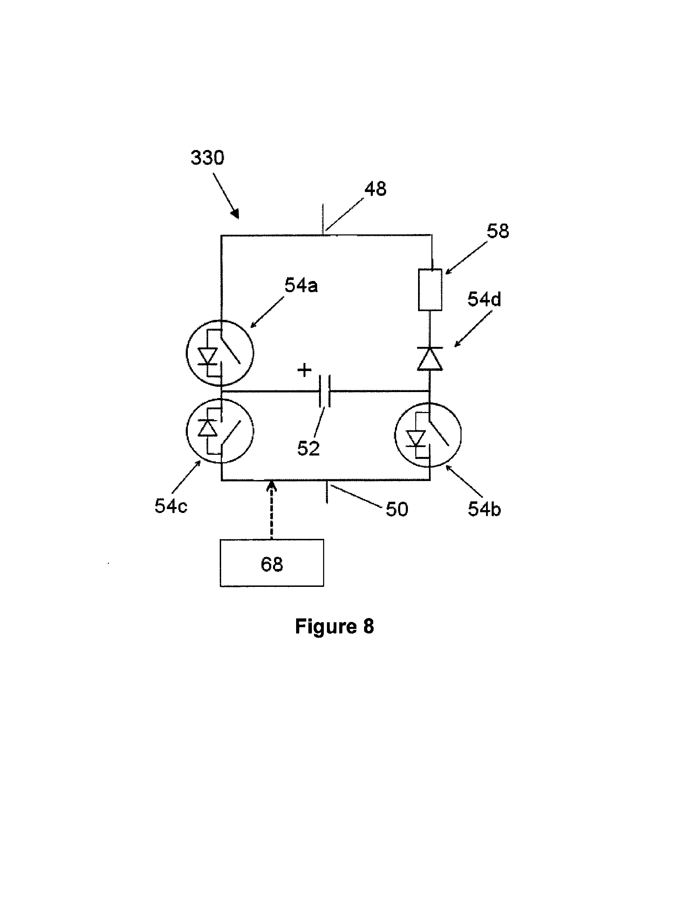

A fourth module 330 according to a fourth embodiment of the invention is shown in Figure 8 and forms part of a voltage source converter 32 as shown in Figure 3. The fourth module 330 of Figure 8 is similar in structure and operation to the first module 30 of Figure 2, and like features share the same reference numerals.

The fourth module 330 differs from the first module 30 in that, in the fourth module 330, the fourth electrical block 54d omits the IGBT so that the resistor 58 is connected in series with the diode. As such the fourth electrical block 54d can conduct current in only one direction. Omission of the IGBT from the fourth electrical block 54d means that it is not possible to form the third and fourth current paths 64,66, as respectively shown in Figures 5c and 5d, and so the fourth module 330 is capable of operating in the main, current limitation and frequency limitation modes, but not the energy removal and discharge modes.

The arrangement of the fourth electrical block 54d in this manner therefore results in savings in terms of size, weight and cost of the fourth module 330 if the fourth module 330 is not required to be configured to operate in any operating mode which requires the fourth electrical block 54d to conduct current in two directions.

It will be appreciated that each of the first, second, third and fourth modules 30,130,230,330 may be used in other types of power applications, in particular power applications requiring a temporary voltage source.

It will be further appreciated that the chain-link converter 44 including a plurality of series-connected first, second, third and fourth modules 30,130,230,330 may be used in other types of power applications.

It is envisaged that, in other embodiments of the invention, the chain-link converter 44 may include a combination of different modules that includes at least two of the first, second, third and fourth modules 30,130,230,330.

It is also envisaged that, in other embodiments of the invention, the resistor may be replaced by the surge arrestor, or the voltage-limiting component may be replaced by the surge arrestor, so as to allow further modification of one or more electrical characteristics of the module to configure the module to operate in one or more further operating modes.

## Claims

1. A module for use in a voltage source converter comprising:
first and second terminals for connection to an electrical network;
an energy storage device;
at least one switching element, the or each switching element being switchable to switch the energy storage device into or out of circuit with the first and second terminals to selectively provide a voltage source; and
a voltage-limiting component and/or a resistive element, the switching element or at least one of the switching elements being switchable to selectively form a current path that passes through the voltage-limiting component and/or the resistive element, the switching element or at least one of the switching elements being further switchable to selectively switch the energy storage device into or out of circuit with the voltage-limiting component and/or the resistive element.

2. A module according to Claim 1 wherein at least one switching element is an active switching element, the module further including a control unit configured to control the switching of the or each active switching element.

3. A module according to any preceding claim wherein the current path interconnects the first and second terminals.

4. A module according to Claim 3 when dependent from Claim 2 wherein the control unit is configured to control the switching of the active switching element or at least one of the active switching elements to form the current path to permit a current to flow from the electrical network through the voltage-limiting component and/or the resistive element to regulate or limit a current, voltage or frequency in the electrical network.

5. A module according to Claim 3 or Claim 4 when dependent from Claim 2 wherein the control unit is configured to control the switching of the active switching element or at least one of the active switching elements to form the current path to permit a current to flow from the electrical network through the voltage-limiting component and/or the resistive element to remove excess energy from the electrical network.

6. A module according to any preceding claim wherein the current path is a current loop within the module.

7. A module according to Claim 6 when dependent from Claim 2 wherein the control unit is configured to control the switching of the active switching element or at least one of the active switching elements to form the current path to discharge the energy storage device to a predefined voltage level.

8. A module according to Claim 6 or Claim 7 when dependent from Claim 3 wherein the switching element or at least one of the switching elements is switchable to form a first current path which interconnects the first and second terminals and a second current path which is a current loop within the module, the first and second current paths overlapping each other.

9. A module according to Claim 2 or any of Claims 3 to 8 when dependent from Claim 2 wherein the control unit is configured to control the switching of the or each active switching element or at least one of the active switching elements to form the current path to modify a rate of charge or discharge of the energy storage device.

10. A module according to any preceding claim including a plurality of electrical blocks arranged as first and second pairs of electrical blocks, the first and second pairs of electrical blocks being connected in parallel with the energy storage device in a full-bridge arrangement, each of the plurality of electrical blocks including a switching element, one of the plurality of electrical blocks including the voltage-limiting component and/or one of the plurality of electrical blocks including the resistive element.

11. A module according to Claim 10 wherein the voltage-limiting component is connected in parallel or series with the switching element of one of the plurality of electrical blocks and/or the resistive element is connected in parallel or series with the switching element of one of the plurality of electrical blocks.

12. A module according to Claim 10 or Claim 11 including the voltage-limiting component and the resistive element, wherein one of the plurality of electrical blocks includes both of the voltage-limiting component and the resistive element, or one of the plurality of electrical blocks includes the voltage-limiting component while another of the plurality of electrical blocks includes the resistive element.

13. A module according to any of Claims 10 to 12 wherein the electrical block including the voltage-limiting component and/or the resistive element includes a passive switching element arranged such that the electrical block including the voltage-limiting component and/or the resistive element can conduct current in only one direction.

14. A chain-link converter comprising a plurality of series-connected modules, wherein each module is in accordance with any preceding claim.

15. A voltage source converter comprising at least one module according to any of Claims 1 to 12.

16. A voltage source converter according to Claim 15 including:
first and second DC terminals for connection to a DC electrical network;
at least one converter limb extending between the first and second DC terminals and having first and second limb portions separated by an AC terminal, the or each AC terminal being connectable to an AC electrical network, each limb portion including at least one module according to any of Claims 1 to 13 or a chain-link converter according to Claim 14.
